# EUROPEAN PATENT APPLICATION

(11) **EP 3 373 593 A1**
(43) Date of publication of application: **12.09.2018**
(21) Application number: 17160330.1
(22) Date of filing: 10.03.2017
(51) Int. Cl.: H04R 1/10, H02J 7/00, H04R 25/00

(54) **A CHARGING KIT FOR AN INDUCTIVELY-CHARGED HEARING INSTRUMENT AND A RECHARGEABLE HEARING INSTRUMENT**

(71) Applicant: GN Hearing A/S, 2750 Ballerup (DK)
(72) Inventor: JOHANSEN, Jan, 2750 Ballerup (DK)
(74) Representative: Aera A/S

(57) **Abstract**

Invention regards a charging kit (2) for an inductively-charged, rechargeable hearing instrument as well as a rechargeable hearing instrument (4). The charging kit (2) comprises a first part (6) comprising at least one first cavity (8), a second part (10) adapted to be received in said first cavity (8), wherein the first part (6) and the second part (10) are so adapted that energy is transferrable from the first part (6) to the second part (10) when the second part (10) is received in said first cavity (8). The second part (10) comprises a second cavity (12) adapted to receive the hearing instrument (4), and it further comprises a first magnetic coil (14) having a first plane (141), wherein the hearing instrument (4) comprises a second magnetic coil (16) having a second plane (161). At least one portion of the hearing instrument (4) is pass-fitted and immobilized in the second cavity (12) and the first and the second planes (141, 161) are parallel, when the hearing instrument (4) is received in the second cavity (12).

## Description

### TECHNICAL FIELD

The disclosure relates to a charging kit for an inductively-charged hearing instrument and a rechargeable hearing instrument.

### BACKGROUND

Hearing instruments (HI) require energy to function properly. Traditionally, the energy is provided by a battery, either disposable or rechargeable, the latter normally offering superior user experience. These rechargeable batteries are normally replenished using conventional, galvanic charging technology. Recently, however, wireless, and in particular inductive, charging has seen increased popularity, also in the field of hearing instruments.

Typically, charging of a rechargeable hearing instrument is enabled by means of a portable charging unit. As is widely known in the art, different types of hearing instruments, e.g. Behind-the-ear (BTE), Completely-in-the-canal (CIC), Receiver-in-ear (RIE), are purposefully designed and built in a different manner, with components being placed at the most suitable place for each particular type of device. In the same context, charging units are designed in parallel with the corresponding hearing instrument and with a tailored set of functionalities in order to maximally conform to the technical specification of the corresponding hearing instrument. Clearly, it is desirable to avoid a complete redesign of the HI-charging unit each time a novel hearing instrument is developed. In conjunction herewith, it has so far been proven unfeasible to provide a universal charging unit with good charging properties, capable to adequately replenish a plurality of differently shaped and inductively-charged hearing instruments. This is at least in part due to various hearing instruments being shaped differently.

US6658124 discloses a rechargeable hearing aid, where the replenishment of the exhausted battery is done wirelessly, i.e. by means of an inductive charging unit. More specifically, US6658124 discloses a one-piece inductive charging unit in the shape of a truncated cone. The cone has an inner throat positioned in its uppermost section. The disclosed hearing aid, CIC-devices are mainly discussed, is introduced from above into said throat such that a secondary magnetic coil of the hearing aid is aligned with and surrounded by a primary magnetic coil of the charging unit. This configuration entails certain freedom for the user of the hearing aid, e.g. no precise placement of the hearing aid within the charging unit is required. In other words, the process of charging of the hearing aid is invariant at least to the rotation of the CIC-hearing aid in the throat of the charging unit. Structural features of the shown charging unit, such as general shape, placement of the magnetic coils, shape of the throat, indicate that said unit first and foremost is conceived to be used in connection with CIC-devices.

As mentioned above, US6658124 provides certain degree of flexibility to the user, in particular with respect to positioning of the hearing aid in the charging unit. However, the presented solution with respect to the charging unit clearly leaves room for improvement. By way of example and as argued above, each particular model of a hearing aid requires a corresponding, customized charging unit. This is also the case for the solution presented in US6658124. Obviously, this renders the design and manufacturing processes both more complex and more expensive. Further, designer of a hearing aid/charging unit-system of the above kind faces considerable constraints when dimensioning and placing various components, which normally results in trade-offs and subpar charging performance.

One objective of the invention at hand is to at least alleviate above-identified and other drawbacks associated with the current art.

### SUMMARY

The above stated objective is achieved by means of the charging kit and a rechargeable hearing instrument according to the independent claims, and by the embodiments according to the dependent claims.

More specifically, one aspect of the present invention provides a charging kit for an inductively-charged, rechargeable hearing instrument and a rechargeable hearing instrument, said charging kit comprising a first part comprising at least one first cavity and at least one second part adapted to be received in said at least one first cavity. The first part and the at least one second part are so adapted that energy is transferrable from the first part to the at least one second part when the at least one second part is received in said at least one first cavity. Further, said at least one second part comprises a second cavity adapted to receive the rechargeable, inductively-charged hearing instrument, and it further comprises a first, disc-shaped magnetic coil having a first plane and the rechargeable, inductively-charged hearing instrument comprises a second, disc-shaped magnetic coil having a second plane. At least one portion of the rechargeable, inductively-charged hearing instrument is pass-fitted and immobilized in the second cavity and the first and the second planes are parallel, when the rechargeable, inductively-charged hearing instrument is received in the second cavity. Here, term pass-fitted is to be construed as entailing that the hearing instrument is held precisely in the cavity, yet not so tightly that it cannot be removed therefrom. Further, the planes are substantially parallel, i.e. a certain deviation from perfectly parallel planes (around 8-10 degrees) is encompassed by the claim.

In the following, positive effects and advantages of the invention at hand are presented with reference to the first aspect of the invention.

On a general level, a charging solution consisting of two separate parts is desirable as it contributes in avoiding strong constraints when designing the hearing instruments/chargers. More specifically and as is known in the art, a substantial number of components is required to render inductive charging of the hearing instrument possible, both with regards to energy conversion, but also with respect to added functionality such as charger-device communication during charging, e.g. to inform on battery level in the hearing instrument. Advantageously, a majority of these components is placed in the charger case that inherently is of considerable size. In the same context, as few components as possible should be placed in the relatively small charging module and/or the hearing instrument itself.

Further, the underlying inventive concept is that one generic charger case with various, HI-specific charging modules is used. Here, the specificity of the charging module is primarily to be construed as relating to the shape of the corresponding hearing instrument. This entails that the outer shape of the HI corresponds to the outline of the cavity, which makes said HI suitable for (partial) insertion into the cavity of the charging module. In consequence, the received HI is pass-fitted and immobilized in the second cavity. Accordingly and for each HI/charging module-couple, the second cavity is so configured that the received HI may only adopt a single position - the one where the first and the second planes, holding respective magnetic coil are parallel. Further, this solution also makes it possible to optimize the distance between the two magnetic coils. Hereby, the vital parameters of the charging process are optimal for each hearing instruments. This results in the best possible energy transfer, optimizing thereby the charging time and the energy consumption.

Further, the manufacturing process for the charger unit is simplified, as all charger cases (holding the majority of the required components) are identical, both in terms of appearance as well as the components integrated therein, whereas the charging modules are HI-specific and typically differ in shape and positioning of the magnetic coil.

In another aspect of the present invention, it is provided a charging kit for an inductively-charged, rechargeable hearing instrument, said charging kit comprising a first part comprising at least one first cavity and at least one second part adapted to be received in said at least one first cavity. The first part and the at least one second part are so adapted that energy is transferrable from the first part to the at least one second part when the at least one second part is received in said at least one first cavity. The at least one second part comprises a second cavity adapted to receive an inductively-charged hearing instrument, and it further comprises a first, disc-shaped magnetic coil having a first plane. When the inductively-charged hearing instrument is received in the second cavity, at least one portion of the rechargeable, inductively-charged hearing instrument is pass-fitted and immobilized in the second cavity.

Further advantages and features of embodiments will become apparent when reading the following detailed description in conjunction with the drawings

### BRIEF DESCRIPTION OF THE DRAWINGS

Fig. 1 is a perspective view of a charging kit for an inductively-charged hearing instrument and a rechargeable hearing instrument itself. The kit comprises a charger case and two charging modules. The two inductively-charged hearing instruments are shown, both are hearing aids of the BTE-type. One BTE-device is inserted into the charging module and the other is positioned above the inserted charging module.
Fig. 2 is a perspective view of an assembly comprising a part of a charger case, an inserted charging module and an inductively-charged hearing instrument (BTE-device) inserted into the charging module according to one embodiment of the present invention.
Fig. 3 is a top view of an inserted inductively-charged hearing instrument (BTE-device) according to one embodiment of the present invention.
Fig. 4 schematically shows a magnetic coil of an inductively-charged hearing instrument (BTE-device) receivable by a cavity of a charging module.
Fig. 5 shows a charging module and a corresponding, inductively-charged hearing instrument (BTE-device) according to one embodiment of the present invention.
Figs. 6a-6d illustrate different embodiments of the charging modules of the present invention.

### DETAILED DESCRIPTION OF THE PREFERRED EMBODIMENTS

The present invention will now be described more fully hereinafter with reference to the accompanying drawings, in which preferred embodiments are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

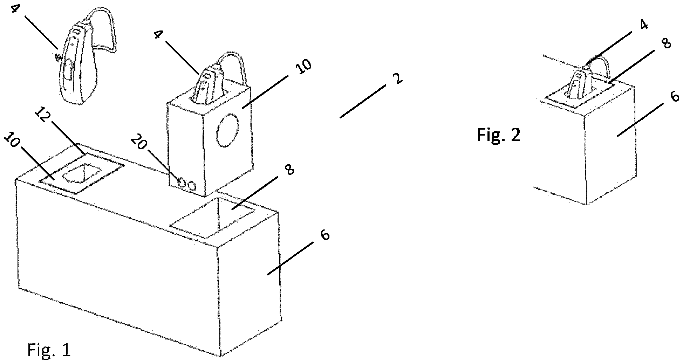

Fig. 1 is a perspective view of a charging kit for an inductively-charged hearing instrument and a rechargeable hearing instrument itself. The shown kit comprises a charger case and two charging modules. The two inductively-charged hearing instruments are also shown, both are hearing aids of the BTE-type. One BTE-device is inserted into the charging module and the other is positioned above the inserted charging module. Here, it is to be understood that many different ear-worn devices such as traditional hearing aids, tinnitus maskers, non-prescription hearing aids and others, all are encompassed by the employed omnibus term hearing instrument.

As it may be seen in Fig. 1, the charger case (first part) has two oppositely positioned cavities, arranged at the respective end of the case housing. Obviously, a charger case holding a single cavity is equally conceivable. Each shown cavity may receive a corresponding charging module (second part). Hearing instruments shown in Fig. 1 are hearing aids of the BTE-type.

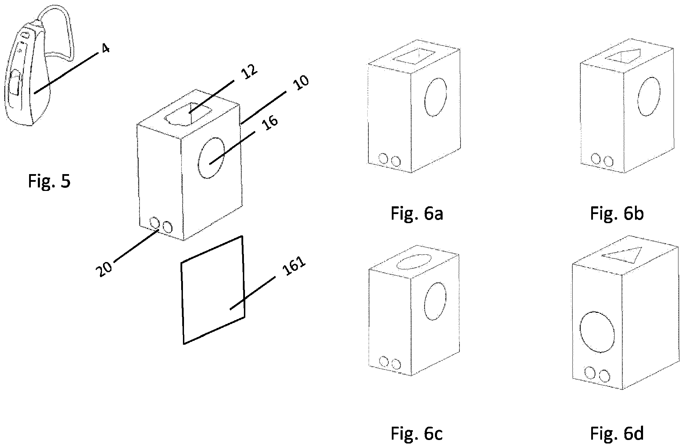

Given its considerable size and system constraints as discussed above, it is desirable to fit as many system components as possible in the charger case. Thus, charger case typically holds some/all of the following components: a charging circuit, a DC-DC converter, a radio receiver, a USB-socket and a battery and a display for displaying charging time and/or remaining charging time and/or charging level. By virtue of the present invention, the manufacturing process for the charger unit is simplified, as all charger cases are identical, both in terms of appearance as well as with respect to the components integrated therein. The charging module (described in greater detail in connection with Fig. 5), on the other hand, is to be as simple as possible while conforming to the requirements imposed by the hearing instrument.

Fig. 2 is a perspective view of an assembly comprising a part of a charger case, an inserted charging module and an inductively-charged hearing instrument (BTE-device inserted into the charging module according to one embodiment of the present invention). Hence, the charging module is inserted into a cavity of the charger case and a hearing instrument is inserted into a cavity of the charging module itself. In this configuration, energy may be transferred from the charger case to the charging module, provided that the charger case is connected to an electrical grid or has built-in means for storing energy, such as a battery (not shown). Shown configuration also entails that charging of the hearing instrument itself may occur, i.e. energy may be inductively transferred from the charging module to the hearing instrument. In the context of the invention at hand, the process of inductive charging is based on electromagnetic phenomena well known to the person skilled in the art.

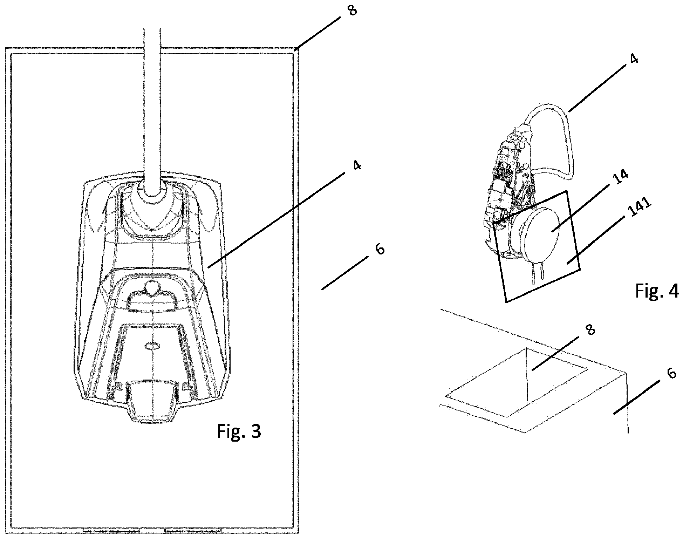

Fig. 3 is a top view of an inserted, inductively-charged hearing instrument (hearing aid of the BTE-type) according to one embodiment of the present invention. Upper portion of the hearing instrument, received in a cavity of the charging module and comprising a switch and a tubing, is visible. In consequence, at least lower portion of the hearing instrument is pass-fitted in the cavity. More specifically, an outline of the second cavity corresponds to an outer shape of this lower portion of the hearing instrument such that said portion of the inductively-charged hearing instrument may mate with the second cavity. As a consequence, a section of the hearing instrument becomes immobilized in the cavity.

Fig. 4 schematically shows a magnetic coil 14, having a first plane, of an inductively-charged hearing instrument (again, a hearing aid of the BTE-type) receivable by a cavity of a charging module. Throughout the application, terms inductive coil and magnetic coil are interchangeably used. Suitably, the inductive coils are disc-shaped. The charging module has a corresponding magnetic coil, having a second plane (not shown in Fig. 4). The cavity is so configured that the received hearing instrument may only adopt a single position - the one where the first and the second planes of the respective magnetic coil are substantially parallel. This solution also makes it possible to optimize the distance between the two magnetic coils. Here, for modern BTE-devices of standard size, the optimal distance between the two magnetic coils is less than 3,0 mm, more preferred less than 2,5 mm and most preferred less than 2,0 mm. It is desirable to keep the distance as short as possible. Hereby, the vital parameters of the charging process may be optimized for each hearing instrument/charging module-couple. As stated above, this results in the best possible energy transfer. The inductive coil of the hearing instrument is typically arranged in proximity or, as shown in Fig. 4, in contact with the HI-battery. Normally, the centers of the first and the second disc-shaped magnetic coils are aligned in a direction substantially perpendicular to the coil planes, when the hearing instrument is received in the cavity of the charging module. This implies that a certain deviation from perfect perpendicularity (around 5 degrees) is accepted.

Fig. 5 shows a charging module and a corresponding, inductively-charged hearing instrument, hearing aid of the BTE-type, according to one embodiment of the present invention. Although not visible here, the BTE-device has an inductive coil positioned analogously with the inductive coil shown in Fig. 4. The charging module has a corresponding inductive coil. Here and as stated in conjunction with Fig. 2, the process of inductive charging of the hearing instrument is based on electromagnetic phenomena well known to the person skilled in the art. In certain embodiments, a disc-shaped magnetic coil integrated in the charging module has a larger diameter than the corresponding magnetic coil built-in the hearing instrument. In one embodiment, a diameter of the disc-shaped coil of the charging module is around 20 mm and the diameter of the disc-shaped coil belonging to the hearing instrument is around 10 mm.

The charging module has metallic contacts. The charger case (not shown in Fig. 5) has similar contacts. These means are in mutual contact when the charging module is received in the cavity of the charger case. In consequence, electrical energy may galvanically be transferred from the charger case to the charging module. In one embodiment, these metallic contacts are magnetized for easier establishment of the galvanic connection between the charging module and the charger case.

Figs. 6a-6d illustrate different embodiments of the charging module of the present invention, all encompassed by the scope of the present invention. More specifically, different placements of the magnetic coil and various shapes of the cavity associated with the charging module are illustrated. Contacting means of the respective charging module are also shown.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A charging kit (2) for an inductively-charged, rechargeable hearing instrument (4) and a rechargeable hearing instrument (4), said charging kit (2) comprising:
- a first part (6) comprising at least one first cavity (8),
- at least one second part (10) adapted to be received in said at least one first cavity (8), wherein the first part (6) and the at least one second part (10) are so adapted that energy is transferrable from the first part (6) to the at least one second part (10) when the at least one second part (10) is received in said at least one first cavity (8),
wherein said at least one second part (10) comprises a second cavity (12) adapted to receive the rechargeable, inductively-charged hearing instrument (4), and it further comprises a first, disc-shaped magnetic coil (14) having a first plane (141),
wherein the rechargeable, inductively-charged hearing instrument (4) comprises a second, disc-shaped magnetic coil (16) having a second plane (161), wherein, when the rechargeable, inductively-charged hearing instrument (4) is received in the second cavity (12), at least one portion of the rechargeable, inductively-charged hearing instrument (4) is pass-fitted and immobilized in the second cavity (12) and the first and the second planes (141, 161) are parallel.

2. A charging kit (2) for an inductively-charged, rechargeable hearing instrument and a rechargeable hearing instrument (4) according to claim 1, wherein the first part (6) comprises two cavities.

3. A charging kit (2) for an inductively-charged, rechargeable hearing instrument and a rechargeable hearing instrument (4) according to any of the preceding claims, wherein the first part (6) comprises a connector configured for connecting to an electrical grid.

4. A charging kit (2) for an inductively-charged, rechargeable hearing instrument and a rechargeable hearing instrument (4) according to any of the preceding claims, wherein the second part (10) comprises an energy storage.

5. A charging kit (2) for an inductively-charged, rechargeable hearing instrument and a rechargeable hearing instrument (4) according to any of the preceding claims, wherein each of the first (6) and the second (10) parts comprises metal contacts (20) configured for contacting one another when the at least one second part (10) is received in said at least one first cavity (8), so that electrical energy is transferred from the first part (6) to the at least one second part (10).

6. A charging kit (2) for an inductively-charged, rechargeable hearing instrument and a rechargeable hearing instrument (4) according to claim 5, wherein at least one of said metal contacts (20) are magnetized.

7. A charging kit (2) for an inductively-charged, rechargeable hearing instrument and a rechargeable hearing instrument (4) according to any of the preceding claims, wherein, when the rechargeable, inductively-charged hearing instrument (4) is received in the second cavity (12), central distance between the first and second disc-shaped magnetic coils (14, 16) is less than 3,0 mm, more preferred less than 2,5 mm and most preferred less than 2,0 mm.

8. A charging kit (2) for an inductively-charged, rechargeable hearing instrument and a rechargeable hearing instrument (4) according to any of the preceding claims, wherein, when the rechargeable, inductively-charged hearing instrument (4) is received in the second cavity (12), a center of the first and a center of the second disc-shaped magnetic coils (14, 16) are aligned.

9. A charging kit (2) for an inductively-charged, rechargeable hearing instrument and a rechargeable hearing instrument (4) according to any of the preceding claims, wherein the first, disc-shaped magnetic coil (14) has a larger diameter than the second, disc-shaped magnetic coil (16).

10. A charging kit (2) for an inductively-charged, rechargeable hearing instrument and a rechargeable hearing instrument (4) according to claim 9, wherein the first, disc-shaped magnetic coil (14) has a diameter of around 20 mm and the second, disc-shaped magnetic coil (16) has a diameter of around 10 mm.

11. A charging kit (2) for an inductively-charged, rechargeable hearing instrument and a rechargeable hearing instrument (4) according to any of the preceding claims, wherein said hearing instrument (4) is of the behind-the ear type (BTE).

12. A charging kit (2) for an inductively-charged, rechargeable hearing instrument and a rechargeable hearing instrument (4) according to any of the preceding claims, wherein, when said inductively-charged hearing instrument (4) is received in the second cavity (12), at least a section of said at least one portion of the inductively-charged hearing instrument (4) abuts an outline of the second cavity (12).

13. A charging kit (2) for an inductively-charged, rechargeable hearing instrument, said charging kit (2) comprising:
- a first part (6) comprising at least one first cavity (8),
- at least one second part (10) adapted to be received in said at least one first cavity (8), wherein the first part (6) and the at least one second part (10) are so configured that energy is transferrable from the first part (6) to the at least one second part (10) when the at least one second part (10) is received in said at least one first cavity (8),
wherein said at least one second part (10) comprises a second cavity (12) adapted to receive an inductively-charged hearing instrument (4), and it further comprises a first, disc-shaped magnetic coil (14) having a first plane (141), wherein, when the inductively-charged hearing instrument (4) is received in the second cavity (12), at least one portion of the rechargeable, inductively-charged hearing instrument (4) is pass-fitted and immobilized in the second cavity (12).

14. An inductively-charged, rechargeable hearing instrument (4) for insertion into a part of a charging kit (2), wherein the rechargeable, inductively-charged hearing instrument (4) comprises a disc-shaped magnetic coil (16) having a plane (161), wherein, when the rechargeable, inductively-charged hearing instrument (4) is inserted into a cavity (12) of the part of the charging kit (2), at least one portion of the rechargeable, inductively-charged hearing instrument (4) is pass-fitted and immobilized in the cavity (12).
